# EUROPEAN PATENT SPECIFICATION

(11) **EP 2 151 082 B1**
(45) Date of publication and mention of the grant of the patent: **16.05.2012**
(21) Application number: 07822621.4
(22) Date of filing: 15.11.2007
(51) Int. Cl.: H04L 1/06

(54) **NEIGHBOURING DEVICE AID IN RECEIVING SETS OF DATA**
NACHBAREINRICHTUNGSHILFE BEIM EMPFANGEN VON MENGEN VON DATEN
ASSISTANCE D'UN DISPOSITIF VOISIN À LA RÉCEPTION D'ENSEMBLES DE DONNÉES

(30) Priority: 18.05.2007 US 750741
(43) Date of publication of application: 10.02.2010
(73) Proprietor: Sony Ericsson Mobile Communications AB, 221 88 Lund (SE)
(72) Inventor: BENGTSSON, Henrik, S-22736 Lund (SE); LARSSON, Bo, S-217 64 Malmö (SE); LINDOFF, Mats, S-22736 Lund (SE); BLOMBERG, Mats, S-18773 Täby (SE); ÖSTSJÖ, Anders, S-23736 Bjärred (SE); MINÖR, Sten, S-22738 Lund (SE)
(74) Representative: VALEA AB
(86) International application number: PCT/EP2007/062379
(87) International publication number: WO 2008/141680

(56) References cited:
- EP-A- 1 113 592
- EP-A- 1 592 185
- US-A1- 2006 205 433
- US-A1- 2007 053 333

## Description

### TECHNICAL FIELD OF THE INVENTION

The present invention relates to the field of receiving sets of data in a wireless communication terminal via a wireless wide area network. More particularly the present invention relates to a method, wireless communication device and a computer program product for receiving a set of data in a first wireless communication device via a first wireless network interface as well as to a method, wireless communication device and a computer program product for aiding a neighbouring wireless communication device to receive a set of data via a first wireless network interface of the neighbouring device.

### DESCRIPTION OF RELATED ART

Portable communication devices, such as cellular phones, nowadays more and more frequently comprise various sorts of media playing functionalities. It is then known to download such content to the device via a wireless network.

When downloading data to a portable communcation device, like a cellular phone, the rate at which such data is downloaded is dependent on the quality of the link between the device and the network, which link quality is in these case often determined as bit error rate (BER). This bit error rate furthermore determines something called chiprate. The chiprate in a wireles system is the rate at which chips (zero:es or one:es) are sent. Several chips are used to code the actual information, the bits. With less chips per bit, a higher speed is achieved. In a system with low bit error error rate just a few chips are needed to code a bit. But with a high bit error rate, several chips are needed for every bit.

This means that if the connection to a wireless network is poor, the downloading of a file may take a very long time. This can be frustrating for a user. There is therefore a need for speeding up the dowload data in case of poor link qualities.

In the field of wireless communcation devices it is also known to use antenna diversity. In antenna diversity a wireless communication device may be provided with several antennas and the one that has the best reception quality is then selected for transferring or receiving data. However, portable communcation devices are often small and in case one device is provided with several such antennas, these would normally be provided very close to each other. This also means that the link qulity experienced by one such antenna would not differ too much from that experienced by another antenna in the device. The provision of an additional antenna would furthermore lead to additional costs and a larger size of the device, which is often undesirable. US 2006/205433 discloses a method and an apparatus involving diversity and having an RF and a local area communication unit for this purpose.

In wireless networks such as WCDMA networks the same priciple is often applied for neigbbouring base stations or cells, in so-called soft handover. In this case a cellular phone communicates with several base stations in a network and the system hands over the phone to the base station which has the best link quality.

It would therefore be interesting to exploit this type of antenna diversity functionality for the reception of data and then especially for small-sized portable communication devices.

There is therefore a need for allowing higher transfer rates for data such as various data files, even though the link quality is bad.

### SUMMARY OF THE INVENTION

The present invention is directed towards providing assisted reception of a set of data for wireless communication devices.

The invention essentially relates to the subject-matter of the independent claims 1, 2, 6 and 7. Preferred embodiments are dependent claims.

The invention has the following advantages. It allows a higher rate of transferring a set of data to a wireless communication device. This is achieved since the wireless communication device gets assisted by neighbouring devices and can therefore correct any deficient parts of the set of data it itself receives. This can furthermore be implemented at low cost without any substantial changes to the hardware of such a device.

It should be emphasized that the term "comprises/comprising" when used in this specification is taken to specify the presence of stated features, steps or components, but does not preclude the presence or addition of one or more other features, steps, components or groups thereof.

### BRIEF DESCRIPTION OF THE DRAWINGS

The present invention will now be described in more detail in relation to the enclosed drawings, in which:
fig. 1 schematically shows an access network connected to a core network as well as two cellular phones connected to a base station of the access network,
fig. 2 shows a front view of a wireless communication device according to the present invention in the form of a cellular phone,
fig. 3 shows a block schematic of the relevant parts of the two cellular phones for providing the present invention,
fig. 4 shows a flow chart of a number of method steps taken in a method for receiving a set of data according to the present invention,
fig. 5 shows a flow chart of a number of method steps taken in a method for aiding a wireless communication device to receive a set of data according to the present invention, and
fig. 6 shows a CD ROM disc on which program code for executing a method according to the invention is provided.

### DETAILED DESCRIPTION OF EMBODIMENTS

The present invention is directed towards assisting a wireless communication terminal in receiving a set of data, for instance a data file, like an MP3 file.

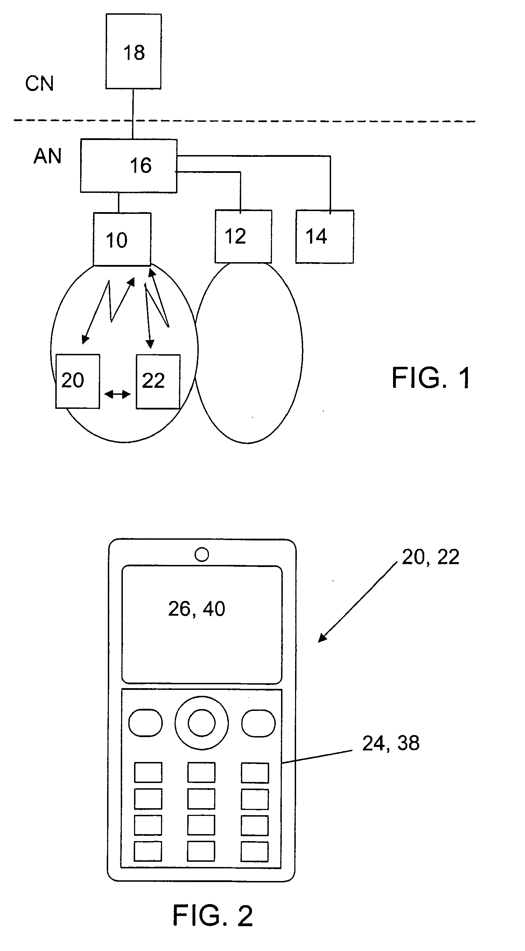

The present invention will now be described in more detail in the non-limiting example context of a wireless wide area network, which is here a Universal Mobile Telecommunications (UMTS) network that is shown in fig. 1. The invention is not limited to UMTS but can for instance also be applied in LTE (Long Term Evolution) GSM (Global System for Mobile Communications) and CDMA (Code Division Multiple Access) networks. A core network CN has a first service node 18, which may be a General Packet Radio Service (GPRS) node tailored to provide packet-switched type services, which is sometimes referred to as the serving GPRS service node (SGSN). The node 18 may be connected to connectionless-oriented networks such as the Internet. It should here be realised that the core network CN may include other types of service nodes, such as a circuit-switches type of service node. However, additional service nodes have here been omitted for the sake of clarity.

The core network service node 18 connects to an access network AN, which is here a UMTS Terrestrial Radio Access Network (UTRAN). UTRAN AN includes one or more radio network controllers (RNC), where only one RNC 16 is shown in fig. 1. The RNC 16 is connected to a plurality of base stations. The RNC 16 is connected to a first base station 10, a second bas station 12 and a third base station 14. Each of these base stations 10, 12 and 14 control communication within a cell. Here it should be realised that one base station may handle more than one cell. In the figure only two cells are shown, one associated with the first base station 10 and one associated with the second base station 12 (which cell is here shown as being empty). The cells are provided in a geographical area covered by the access network AN. In fig. 1 two user equipment units in the form of a first and a second cellular phone 20 and 22 are shown in the cell handled by the base station 10 in the access network AN and shown as communicating with this base station 10. They are also shown as communicating with each other. It should be realised that normally there may be provided several cellular phones communicating with a base station. The nature of the communication will shortly be described in more detail.

The cellular phones 20 and 22 are both wireless communication devices and here portable communication devices. One such device that is applicable for both the first and second wireless communication devices 20 and 22 is shown in a front view in fig. 2. In the preferred embodiment the device is a cellular phone 20, 22 and is normally provided with a display 26, 40 and a user input unit in the form of a keypad 24, 38 including a number of keys. It normally includes other units like speakers and microphones as well (not shown). The keypad 24, 38 is used for entering information such as selecting of functions and responding to prompts and the display 26, 40 is used for displaying functions and prompts to a user of the phone. A cellular phone is just one example of a type of wireless communication device that is a portable communication device in which the invention can be implemented. The invention can for instance also be used in other portable communication devices, such as in a PDA (personal digital assistant), a palm top computer, a lap top computer or a media player as long as the device has ability to communicate via the wireless network.

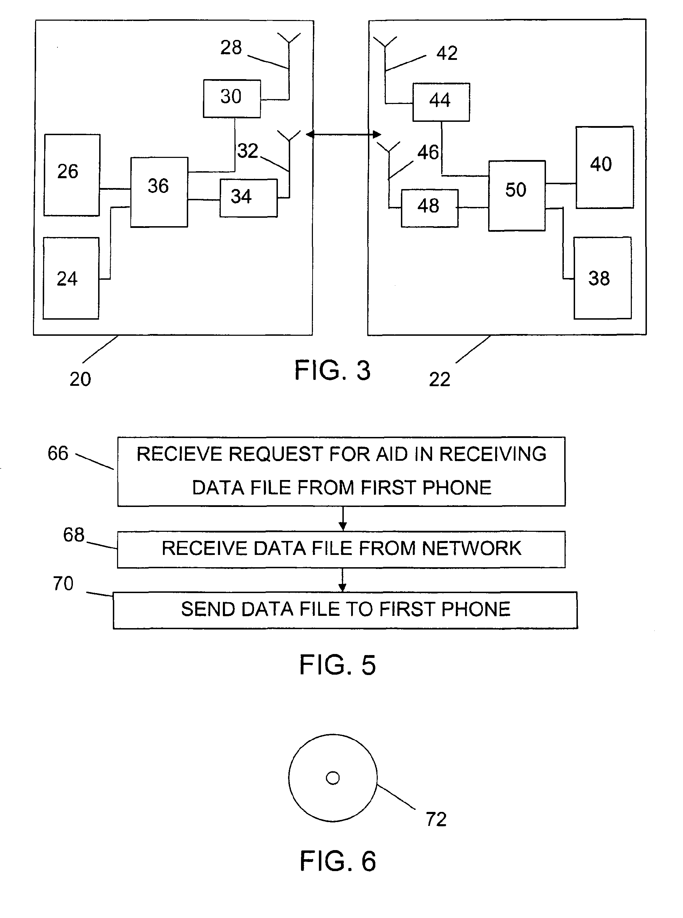

Fig. 3 shows a block schematic of the first and second portable communication devices, 20 and 22. They each include the above described user keypads 24 and 38 as well as displays 26 and 40. These entities 24 and 26 are in the first phone 20 connected to a first control unit 36 and in the second phone 22 they 38 and 40 are connected to a second control unit 50. The first control unit 36 is in turn connected to a first network communication unit 30 and to a first neighbour communication unit 34. The first network communication unit 30 is in turn connected to a first wireless network interface in the form of a first antenna 28 and the first neighbour communication unit 34 is in turn connected to a first neighbour device interface 32 for communication with neighbouring wireless communication devices, of which the second cellular phone 22 is one. The first network communication unit 30 is here a radio communication unit, for instance in the form of an ASIC circuit comprising functionality for communication in the wireless network, such as modulators, demodulators, power amplifiers etc. The neighbour communication unit 34 is in this embodiment a Bluetooth communication unit and the neighbour device interface 32 is thus a Bluetooth antenna. In the same way, the second control unit 50 is connected to a second network communication unit 44 and to a first neighbour communication unit 48. The second network communication unit 44 is in turn connected to a second wireless network interface in the form of a third antenna 42 and the second neighbour communication unit 48 is in turn connected to a second neighbour device interface 46 for communication with neighbouring wireless communication devices and here for communicating with the first cellular phone 20. Also the second network communication unit 44 is a radio communication unit, which may be of the same type as the first network communication unit 30, while the neighbour communication unit 48 is also a Bluetooth communication unit and the neighbour device interface 46 is thus also a Bluetooth antenna. It should here be realised that the neighbour communication units and interfaces can be provided in other ways. If for instance the first phone 20 is provided with a system connector, which can be used for interconnecting the phones, this can as an alternative be used. It is also possible to use other ways of providing neighbour communication such as using IR or even a local network like via a LAN or WLAN network. The neighbour communication units and neighbour device interfaces can thus have a number of different configurations depending on how neighbouring devices are able to communicate with each other. The phones do however need to include radio communication units and antennas adapted to communicate according to the communication standard provided by the wireless wide area network.

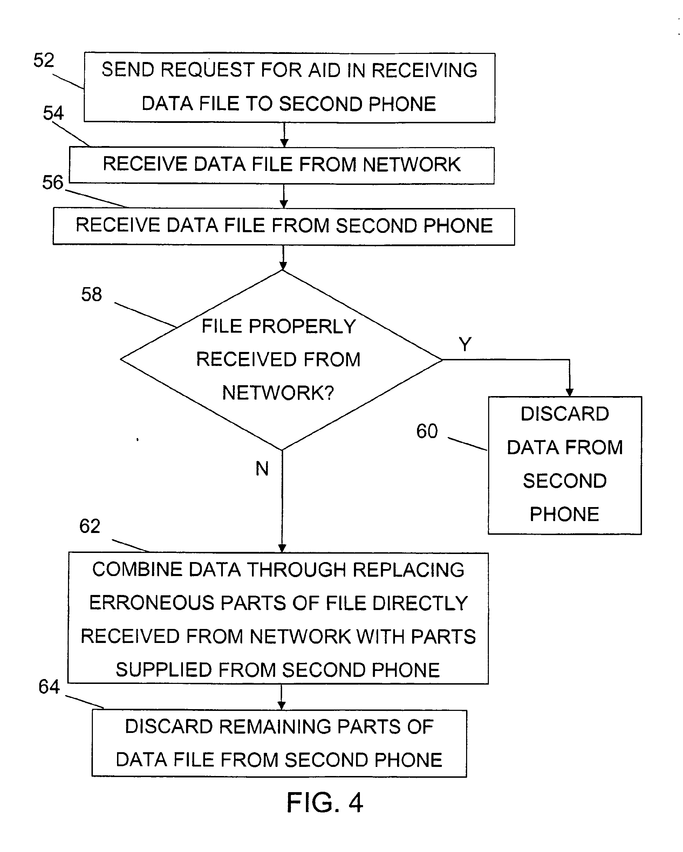

Now the functioning of the present invention according to an embodiment of the present invention will be described in relation to previously described fig. 1 - 3 as well as to fig 4, which shows a flow chart of a number of method steps taken in a method for receiving a set of data according to the present invention provided in the first phone, and to fig. 5, which shows a flow chart of a number of method steps taken in a method for aiding a wireless communication device to receive a set of data according to the present invention performed in the second phone.

It all starts with the user of the first phone 20 wanting to download a set of data, for instance in the form of a data file, which may be a media file like an MP3 file. It is furthermore possible that the link quality between the first phone 20 and the first base station 10 is fairly poor, but the link qualities between the first phone 20 and the other base stations 12 and 14 are even poorer. This means that a file download from a server accessed via the wireless wide area network may normally take a long time.

According to the present invention a neighbour assisting download function may be provided by the first control unit 36 of the first phone 20 and presented to a user of the phone 20 via the display 26. The user of the phone 20 may then select the function using the keypad 24. If the function is selected, the user may be presented with a list of one or more neighbouring phones that may be contacted. This may be done through detecting, via the neighbour device interface 32, which devices are close by, or through looking in a pre-determined list, which list may have been set by the user beforehand. The user may also select terminals himself and enter data regarding them. He may also, if the users of them are close by, see which cellular phones are located in the neighbourhood. Once one or more such neighbouring devices have been selected, the control unit 36 orders the neighbour communication unit 34 to send a request for aid in receiving a set of data, which is here exemplified by a data file, step 52. This request is here sent to the second phone 22. The request may be sent using an instant message via the neighbour device interface 32 to all or some neighbouring devices. It may also be sent as a message via the wide area network. The request is received, step 66, in for instance the second phone 22, via the neighbour device interface 46 and neighbour communication unit 48 of the second phone 22, and forwarded to the second control unit 50 of the second phone 22. The second control unit then starts a neighbour assisting download client function, where the request is presented to the user of the second phone 22, which may accept or decline. The answer is then sent, preferably using the same route back to the control unit 36 of the first phone 20. In this way several responses from neighbouring phones may be received by the first phone 20. If no neighbouring phone accepts, the first control unit 36 may go on and download a file unassisted in conventional manner. All phones that do decline take no part in the assisted downloading, while phones that accept take such part. For the sake of simplicity of the description of the present invention, it is here assumed that only the second phone 22 has accepted to take part in the downloading.

It is here possible that the data file is broadcast from the network. This may be done through the first phone 20 requesting a specialised file transfer from the network. In this case the second phone 22 may be able to receive the data file from the network without any special measures being performed. The data file may also be downloaded on a normal traffic connection dedicated to the first phone 20. In this case, the first control unit 36 may retrieve reception enabling data from the first network communicating unit 30, such as encryption and coding keys used and other suitable data enabling the second phone 22 to receive data destined for the first phone 20. If such reception enabling data is retrieved from the first network communicating unit 30, it may then be sent to the second phone 22 via the neighbour communication unit 34 and the neighbour device interface 32. It is possible that such data is not available until the service has been initiated via the network.

The first phone 20 now decides to download a file from a server via the network. The file is in such downloading transferred from the server via the core network and access network to the first phone 20 via the first base station10. The file is then received by the first control unit 36 via antenna 28 and network communicating unit 30, step 54. The file is at the same time received by the second control unit 50 of the second phone 22 via the antenna 42 and the second network communicating unit 42, step 68. The whole file is thus received by both the phones 20 and 22. The second control unit 50 of the second phone 22 furthermore sends, in this example, the whole copy of the file that it receives via the neighbour communicating unit 48, antenna 46, antenna 32 and neighbour communicating unit 34 to the first control unit 36, step 70. In this way the first control unit 36 receives the whole copy from the second phone, step 56. The first control unit 36 then checks the copy of the file that it itself directly receives from the network. In case the whole file was received properly, step 58, the copy it receives from the second phone 22 is discarded, step 60. However, if it was not, like if some blocks or sections are missing or full of errors, the first control unit 36 combines the two copies of the files through replacing the erroneous or missing parts of the directly received file with the corresponding parts received from the second phone 22, step 62. Thereafter the remaining parts of the file received from the second phone 22 are discarded, step 64.

In this way it is possible for the first phone to receive a file even though the link quality is poor. This is due to the fact that the second phone may have better reception quality.

The invention therefore has the advantages of allowing a higher rate of transferring a set of data to a wireless communication device, than what is normally allowed. This is achieved since a wireless communication device gets assisted by neighbouring devices and can therefore correct any deficient parts of the set of data it itself receives. The invention can furthermore be implemented at low cost without any substantial changes to the hardware of the wireless communication device by using already existing units.

It is standard procedure that a wireless communication device, when communicating with the network, signals the link quality, and then that link quality is used for the data transfer. This link quality is often the bit error rate, which directly influences the speed with which a file is downloaded. It is here possible that the first phone informs the network of the fact that the file transfer is a neighbour assisted file transfer and perhaps the number of neighbouring terminals that are assisting in the downloading of the file. In this case the network may assume a different lower bit error rate than what is being signalled and therefore the file transfer may be speeded up. As an alternative it is possible that the functionality provided by the first control unit 36 considers the number of neighbouring devices that assist in the file transfer and then orders the first network communicating unit 30 to adjust the bit error rate that it reports to the network accordingly, i.e. that it reports a lower bit error rate than it actually perceives, in order to take account of the fact that it is getting assisted. By allowing a higher bit error rate it is in this way possible to receive the data file at a higher speed. In practise it would mean that the network codes the data using less chips per bit. Thereby, the first phone receives data with a higher.bit error rate. The second phone also receives data with a higher bit error rate. By combining these two streams with a higher bit error rate, a bit stream with acceptable error rate is obtained.

According to the present invention the first control unit analyses the data it receives first and only requests the neighbouring phone to supply data it has not properly received. This request is sent over the neighbour device interface. The second phone then replies by only sending the requested data and nothing else, which is then combined with the correctly receive parts of the file in the first phone. Here it is possible that the combining is made fairly infrequently, e.g. once every second.

It should be realised that the present invention is not limited to file download. It can just as well be applied for file upload. In this case it is possible that the first and second base stations 10 and 12 of fig. 1 use the same principles for combining a data file uploaded from for instance the first phone 20. Thus in this case the wireless communication devices according to the present invention are base stations.

The control units in the phones according to the present invention are preferably provided in the form of one or more processors with corresponding memory containing the program code for performing the functions of these units,. This program code can also be provided on one or more computer program products such as a CD ROM disc 72 as depicted in fig. 6, which will perform the invention when loaded into a phone having suitable processing capabilities. Naturally other types of products can be provided for this, like for instance a removable memory like a memory stick. The computer program product can also be provided as software, which is downloaded remotely from a server either outside or inside the cellular network or be downloaded via a computer like a PC to which the phone is temporarily connected.

There are a number of further variations that can be made to the present invention in addition to those already mentioned. It is for instance possible that a request for aid is not sent to a neighbouring device, but that the users of the two devices talk to each other and exchange necessary information for assisted downloading. The user of the second wireless device may then manually enter necessary information or start a neighbour assisting download client function, which will then receive the file in parallel with the requesting device and send the relevant parts of this file to the requesting device.

Although the present invention has been described in connection with specific embodiments, it is not intended to be limited to the specific form set forth herein. Rather, the scope of the present invention is limited only by the accompanying claims.

## Claims

1. Method for receiving a set of data in a first wireless communication device (20; 10) via a first wireless network interface (28) associated with a wireless wide area network (CN,AN), comprising the steps of:
detecting, via a neighbour device interface (32) using Infra Red or Bluetooth technology, which at least one neighbouring wireless communication device is close by,
enabling selection of the at least one neighbouring wireless communication device to assist in receiving the set of data,
sending a request (52) to the at least one neighbouring wireless communication device for aiding in receiving the set of data,
receiving a response from the at least one neighbouring wireless communication device accepting the request,
sending link quality data over the first wireless network interface (28) considering number of neighbouring devices that assist in receiving the set of data and indicating a better link quality than the one that exists over this first wireless network interface (28),
receiving (54) data of the set of data via the first wireless network interface (28),
determining (58) if the whole set of data has been properly received,
requesting only data that has not been properly received from the at least one neighbouring wireless communication device,
receiving (54) the requested data that have not been properly received via the first wireless interface (28) from the at least one neighbouring wireless communication device (22; 12) via the neighbour device interface (32), which neighbouring wireless communication device (22; 12) in turn has receive said set of data via a second wireless network interface (42) associated with said wireless wide area network (CN,AN), and
combining (62) the data of the set of data received via the first wireless network interface (28) with data of the set of data received from the neighbouring wireless communication device (22; 12) in order to obtain the complete set of data and to correct any deficient parts of the set of data the neighbouring wireless communication device (20; 12) has itself received.

2. Wireless communication device (20; 10) comprising:
a first wireless network interface (28) associated with a wireless wide area network (CN, AN),
a neighbour device interface (32) using Infra Red or Bluetooth technology for interfacing with neighbouring wireless communication devices (22; 12),
a network communication unit (30) for communicating over the first wireless network interface (28),
a neighbour communication unit (34) for communication with neighbouring wireless communication devices (22; 12) via the first neighbour device interface (32), and
a control unit (36) configured to
detect, via the neighbour device interface (32), which at least one neighbouring wireless communication device is close by,
enable the user to select the at least one neighbouring wireless communication device to assist in receiving a set of data,
send a request to the at least one neighbouring wireless communication device for aiding in receiving the set of data,
receive a response from the at least one neighbouring wireless communication device accepting the request,send link quality data over the first wireless network interface (28) considering number of neighbouring devices that assist in receiving the set of data and indicating a better link quality than the one that exists over this first wireless network interface (28),
receive data of the set of data via the first wireless interface (28),
determine if the whole set of data has been properly received,
request only data that has not been properly received from the at least one neighbouring wireless communication device,
receive the requested data from the at least one neighbouring wireless communication device (22; 12) via the neighbour device interface (32), which neighbouring wireless communication device (22; 12) in turn has received said set of data via a second wireless network interface (42) associated with said wireless wide area network (CN,AN) and combine the data of the set of data received via the first wireless network interface (28) with data of the set of data received from the neighbouring wireless communication device (22; 12) in order to obtain the complete set of data and to correct any deficient parts of the set of data the neighbouring wireless communication device (20; 12) has itself received.

3. Wireless communication device (20; 10) according to claim 2, wherein the control unit (36) is further configured to send reception enabling data to the second wireless communication device (22; 12).

4. Wireless communication device (20; 10) according to claim 2, wherein data of the set of data received over the first wireless network interface (28) are received with a quality corresponding to the indicated link quality.

5. Wireless communication device (20) according to any of claims 2-4, wherein the device is a portable communication device or base station of a wireless network.

6. Method, for a wireless communication device (22; 12), for aiding a neighbouring wireless communication device (20; 10) that receives a set of data via a first wireless network interface (28), associated with a wireless wide area network (CN,AN), of the neighbouring device (20; 10), comprising the steps of:
receiving (66) a request to aid in the reception of the set of data from the neighbouring wireless communication device (20; 10),
determining whether to accept or decline the request,
upon accepting, sending a response to the neighbouring wireless communication device (20; 10) accepting to aid in the reception,
receiving (68) data of the set of data via a second wireless network interface (42), associated with said wireless wide area network (CN,AN), sand
receiving a request only for data that has not been properly received at the neighbouring wireless communication device (20; 10) via a neighbour device interface (46).
sending (70) the requested data of the set of data received via the second wireless interface (42) over the neighbour device interface (46) using Infra Red or Bluetooth technology,
in order to allow the neighbouring wireless communication device (20; 10) to combine data of the set of data that it has received via the first wireless network interface (28) with data of the set of data supplied by the wireless communication device (22; 12) for obtaining the complete set of data and to correct any deficient parts of the set of data the neighbouring wireless communication device (20; 12) has itself received.

7. Wireless communication device (22; 12) for aiding a neighbouring wireless communication device (20; 10) that receives set of data via a first wireless network interface (28), associated with a wireless wide area network (CN,AN) of the neighbouring device (20; 10) and comprising:
a second wireless network interface (42) associated with said wireless wide area network (AN, CN),
a neighbour device interface (46) using Infra Red or Bluetooth technology for interfacing with neighbouring wireless communication devices (20; 10),
a network communication unit (44) for communicating over the second wireless network interface (42),
a neighbour communication unit (48) for communication with neighbouring wireless communication devices (20; 10) via the neighbour device interface, and
a control unit (50) configured to
receive a request to aid in the reception of the set of data from the neighbouring wireless communication device (20; 10),
determine whether to accept or decline the request,
upon accepting, send a response to the neighbouring wireless communication device accepting to aid in the reception,
receive data of the set of data via the second wireless network interface (42), associated with said wireless wide area network (CN,AN) and receive a request only for data that has not been properly received at the neighbouring wireless communication device (20; 10) via the neighbour device interface (46),
send the requested data over the neighbour device interface (46),
in order to allow the neighbouring wireless communication device (20; 10) to combine data of the set of data that it has itself received via the first wireless network interface (28) with data of the set of data supplied from the wireless communication device (22; 12) for obtaining the complete set of data and to correct any deficient parts of the set of data the neighbouring wireless communication device (20; 12) has itself received.

8. Wireless communication device (22; 12) according to claim 7, wherein the control unit (50) is further configured to receive reception enabling data from the neighbouring wireless communication device (20; 10) and order the network communicating unit (44) to use this reception enabling data when receiving data of the set of data via the second wireless network interface (42).

9. Wireless communication device (22) according to any of claims 7-8, wherein it is a portable communication device or a base station.

## Patentansprüche

1. Verfahren zum Empfangen einer Gruppe von Daten in einer ersten Drahtlos-Kommunikationsvorrichtung (20; 10) über eine erste Drahtlos-Netzwerkschnittstelle (28), die einem Drahtlos-Weitverkehrsnetz (CN, AN) zugehörig ist, umfassend die Schritte:
ein Erfassen, über eine Nachbarvorrichtungsschnittstelle (32) unter Nutzung von Infrarot- oder Bluetooth-Technologie, welche wenigstens eine benachbarte Drahtlos-Kommunikationsvorrichtung in der Nähe ist,
ein Ermöglichen einer Auswahl der wenigstens einen benachbarten Drahtlos-Kommunikationsvorrichtung um beim Empfangen der Gruppe von Daten zu helfen,
ein Senden einer Anfrage (52) an die wenigstens eine benachbarte Drahtlos-Kommunikationsvorrichtung zum Helfen beim Empfangen der Gruppe von Daten;
ein Empfangen einer Antwort von der wenigstens einen benachbarten Drahtlos-Kommunikationsvorrichtung, die die Anfrage akzeptiert,
ein Senden von Verbindungsqualitätsdaten über die erste Drahtlos-Netzwerkschnittstelle (28), wobei die Zahl von benachbarten Vorrichtungen berücksichtigt wird, die beim Empfangen der Gruppe von Daten helfen, und eine bessere Verbindungsqualität angezeigt wird, als die, die über diese erste Drahtlos-Netzwerkschnittstelle (28) existiert,
ein Empfangen (54) von Daten von der Gruppe von Daten über die erste Drahtlos-Netzwerkschnittstelle (28),
ein Bestimmen (58), ob die ganze Gruppe von Daten richtig empfangen wurde,
ein Anfordern nur von Daten, die nicht richtig empfangen wurden, von der wenigstens einen benachbarten Drahtlos-Kommunikationsvorrichtung,
ein Empfangen (54) der angeforderten Daten, die über die erste Drahtlos-Schnittstelle (28) nicht richtig empfangen wurden, von der wenigstens einen benachbarten Drahtlos-Kommunikationsvorrichtung (22; 12) über die Nachbarvorrichtungsschnittstelle (32), welche benachbarte Drahtlos-Kommunikationsvorrichtung (22; 12) wiederum die Gruppe von Daten über eine zweite Drahtlos-Netzwerkschnittstelle (42) empfangen hat, die dem Drahtlos-Weitverkehrsnetz (CN, AN) zugehörig ist, und
ein Kombinieren (62) der Daten von der Gruppe von Daten, die über die erste Drahtlos-Netzwerkschnittstelle (28) empfangen werden, mit Daten der Gruppe von Daten, die von der benachbarten Drahtlos-Kommunikationsvorrichtung (22; 12) empfangen werden, um die komplette Gruppe von Daten zu erhalten und um fehlerhafte Teile der Gruppe von Daten zu korrigieren, die die benachbarte Drahtlos-Kommunikationsvorrichtung (20; 12) selbst empfangen hat.

2. Drahtlos-Kommunikationsvorrichtung (20; 10) umfassend:
eine erste Drahtlos-Netzwerkschnittstelle (28), die einem Drahtlos-Weitverkehrsnetz (CN, AN) zugehörig ist,
eine Nachbarvorrichtungsschnittstelle (32), die Infrarot- oder Bluetooth-Technologie als Schnittstelle zu benachbarten Drahtlos-Kommunikationsvorrichtungen (22; 12) nutzt,
eine Netzwerk-Kommunikationseinheit (30) zum Kommunizieren über die erste Drahtlos-Netzwerkschnittstelle (28),
eine Nachbar-Kommunikationseinheit (34) zum Kommunizieren mit benachbarten Drahtlos-Kommunikationsvorrichtungen (22; 12) über die erste Nachbarvorrichtungsschnittstelle (32), und
eine Steuerungseinheit (36), die konfiguriert ist
über die Nachbarvorrichtungsschnittstelle (32) zu erfassen, welche wenigstens eine benachbarte Drahtlos-Kommunikationsvorrichtung in der Nähe ist,
dem Benutzer zu ermöglichen, die wenigstens eine benachbarte Drahtlos-Kommunikationsvorrichtung auszuwählen, um beim Empfangen einer Gruppe von Daten zu helfen,
eine Anfrage an die wenigstens eine benachbarte Drahtlos-Kommunikationsvorrichtung zu senden, um beim Empfangen der Gruppe von Daten zu helfen,
eine Antwort von der wenigstens einen benachbarten Drahtlos-Kommunikationsvorrichtung zu empfangen, die die Anfrage akzeptiert, Verbindungsqualitätsdaten über die erste Drahtlos-Netzwerkschnittstelle (28) zu senden, wobei die Zahl von benachbarten Vorrichtungen, die beim Empfangen der Gruppe von Daten helfen, berücksichtigt wird, und eine bessere Verbindungsqualität angezeigt wird, als die, die über diese erste Drahtlos-Netzwerkschnittstelle (28) existiert,
Daten der Gruppe von Daten über die erste Drahtlos-Netzwerkschnittstelle (28) zu empfangen,
zu bestimmen, ob die ganze Gruppe von Daten richtig empfangen wurde,
nur Daten anzufordern, die nicht richtig empfangen wurden, von der wenigstens einen benachbarten Drahtlos-Kommunikationsvorrichtung,
die angefragten Daten von der wenigstens einen benachbarten Drahtlos-Kommunikationsvorrichtung (22; 12) über die Nachbarvorrichtungsschnittstelle (32) zu empfangen, welche benachbarte Drahtlos-Kommunikationsvorrichtung (22; 12) wiederum die Gruppe von Daten über eine zweite Drahtlos-Netzwerkschnittstelle (42) empfangen hat, die dem Drahtlos-Weitverkehrsnetz (CN, AN) zugehörig ist, und
die Daten der Gruppe von Daten, die über die erste Drahtlos-Netzwerkschnittstelle (28) empfangen werden, mit Daten der Gruppe von Daten, die von der benachbarten Drahtlos-Kommunikationsvorrichtung (22; 12) empfangen werden, zu kombinieren, um die komplette Gruppe von Daten zu erhalten und um fehlerhafte Teile der Gruppe von Daten zu korrigieren, die die benachbarte Drahtlos-Kommunikationsvorrichtung (20; 12) selbst empfangen hat.

3. Drahtlos-Kommunikationsvorrichtung (20; 10) nach Anspruch 2, wobei die Steuerungseinheit (36) ferner konfiguriert ist, Daten, die einen Empfang ermöglichen, an die zweite Drahtlos-Kommunikationsvorrichtung (22; 12) zu senden.

4. Drahtlos-Kommunikationsvorrichtung (20; 10) nach Anspruch 2, wobei Daten der Gruppe von Daten, die über die erste Drahtlos-Netzwerkschnittstelle (28) empfangen werden, mit einer Qualität empfangen werden, die der angezeigten Verbindungsqualität entspricht.

5. Drahtlos-Kommunikationsvorrichtung (20) nach einem der Ansprüche 2 bis 4, wobei die Vorrichtung eine tragbare Kommunikationsvorrichtung oder eine Basisstation eines Drahtlos-Netzwerks ist.

6. Verfahren für eine Drahtlos-Kommunikationsvorrichtung (22; 12), zum Helfen einer benachbarten Drahtlos-Kommunikationsvorrichtung (20; 10), die eine Gruppe von Daten über eine erste Drahtlos-Netzwerkschnittstelle (28) empfängt, die einem Drahtlos-Weitverkehrsnetz (CN, AN) zugehörig ist, der benachbarten Vorrichtung (20; 10), umfassend die Schritte:
ein Empfangen (66) einer Anfrage, beim Empfang der Gruppe von Daten zu helfen, von der benachbarten Drahtlos-Kommunikationsvorrichtung (20; 10),
ein Bestimmen, ob die Anfrage akzeptiert oder abgelehnt werden soll,
nach einem Akzeptieren, ein Senden einer Antwort an die benachbarte Drahtlos-Kommunikationsvorrichtung (20; 10), wobei akzeptiert wird, beim Empfang zu helfen,
ein Empfangen (68) von Daten von der Gruppe von Daten über eine zweite Drahtlos-Netzwerkschnittstelle (42), die dem Drahtlos-Weitverkehrsnetz (CN, AN) zugehörig ist, und
ein Empfangen einer Anforderung nur für Daten, die noch nicht richtig bei der benachbarten Drahtlos-Kommunikationsvorrichtung (20; 10) empfangen wurden, über eine Nachbarvorrichtungsschnittstelle (46),
ein Senden (70) der angeforderten Daten der Gruppe von Daten, die über die zweite Drahtlos-Schnittstelle (42) empfangen wurden, über die Nachbarvorrichtungsschnittstelle (46) unter Nutzung von Infrarot- oder Bluetooth-Technologie, um zu ermöglichen, dass die benachbarte Drahtlos-Kommunikationsvorrichtung (20; 10) Daten von der Gruppe von Daten, die sie über die erste Drahtlos-Netzwerkschnittstelle (28) empfangen hat, mit Daten von der Gruppe von Daten, die durch die Drahtlos-Kommunikationsvorrichtung (22; 12) bereitgestellt wurden, zu kombinieren, um die komplette Gruppe von Daten zu erhalten und um fehlerhafte Teile der Gruppe von Daten zu korrigieren, die die benachbarte Drahtlos-Kommunikationsvorrichtung (20; 12) selbst empfangen hat.

7. Drahtlos-Kommunikationsvorrichtung (22; 12) zum Helfen einer benachbarten Drahtlos-Kommunikationsvorrichtung (20; 10), die eine Gruppe von Daten über eine erste Drahtlos-Netzwerkschnittstelle (28) empfängt, die einem Drahtlos-Weitverkehrsnetz (CN, AN) zugehörig ist, der benachbarten Vorrichtung (20; 10), und umfassend:
eine zweite Drahtlos-Netzwerkschnittstelle (42), die dem Drahtlos-Weitverkehrsnetz (AN, CN) zugehörig ist,
eine Nachbarvorrichtungsschnittstelle (46), die Infrarot- oder Bluetooth-Technologie als Schnittstelle zu benachbarten Drahtlos-Kommunikationsvorrichtungen (20; 10) nutzt,
eine Netzwerk-Kommunikationseinheit (44) zum Kommunizieren über die zweite Drahtlos-Netzwerkschnittstelle (42),
eine Nachbar-Kommunikationseinheit (48) zum Kommunizieren mit benachbarten Drahtlos-Kommunikationsvorrichtungen (20; 10) über die Nachbarvorrichtungsschnittstelle, und
eine Steuerungseinheit (50), die konfiguriert ist
eine Anfrage zu empfangen, beim Empfang der Gruppe von Daten zu helfen, von der benachbarten Drahtlos-Kommunikationsvorrichtung (20; 10),
zu bestimmen, ob die Anfrage akzeptiert oder abgelehnt werden soll,
nach einem Akzeptieren, eine Antwort an die benachbarte Drahtlos-Kommunikationsvorrichtung zu senden, wobei akzeptiert wird, beim Empfang zu helfen,
Daten von der Gruppe von Daten über die zweite Drahtlos-Netzwerkschnittstelle (42) zu empfangen, die dem Drahtlos-Weitverkehrsnetz (CN, AN) zugehörig ist, und
eine Anforderung nur für Daten zu empfangen, die bei der benachbarten Drahtlos-Kommunikationsvorrichtung (20; 10) nicht richtig empfangen wurden, über die Nachbarvorrichtungsschnittstelle (46),
die angeforderten Daten über die Nachbarvorrichtungsschnittstelle (46) zu senden,
um zu ermöglichen, dass die benachbarte Drahtlos-Kommunikationsvorrichtung (20; 10) Daten von der Gruppe von Daten, die sie selbst über die erste Drahtlos-Netzwerkschnittstelle (28) empfangen hat, mit Daten von der Gruppe von Daten, die von der Drahtlos-Kommunikationsvorrichtung (22; 12) bereitgestellt werden, zu kombinieren, um die komplette Gruppe von Daten zu erhalten und fehlerhafte Teile der Gruppe von Daten zu korrigieren, die die benachbarte Drahtlos-Kommunikationsvorrichtung (20; 12) selbst empfangen hat.

8. Drahtlos-Kommunikationsvorrichtung (22; 12) nach Anspruch 7, wobei die Steuerungseinheit (50) ferner konfiguriert ist, Daten, die einen Empfang ermöglichen, von der benachbarten Drahtlos-Kommunikationsvorrichtung (20; 10) zu empfangen und der Netzwerk-Kommunikationseinheit (44) anzuordnen, diese Daten, die einen Empfang ermöglichen, zu nutzen, wenn Daten von der Gruppe von Daten über die zweite Drahtlos-Netzwerkschnittstelle (42) empfangen werden.

9. Drahtlos-Kommunikationsvorrichtung (22) nach einem der Ansprüche 7 bis 8, wobei sie eine tragbare Kommunikationsvorrichtung oder eine Basisstation ist.

## Revendications

1. Procédé de réception d'un ensemble de données sur un premier dispositif de communication sans fil (20 ; 10), via une première interface de réseau sans fil (28) associée à un réseau étendu sans fil (CN, AN), comprenant les étapes consistant à :
détecter, à l'aide d'une interface de dispositif voisin (32) utilisant la technologie infrarouge ou Bluetooth, s'il existe au moins un dispositif de communication sans fil voisin qui est proche ;
valider la sélection dudit au moins un dispositif de communication sans fil voisin pour contribuer à recevoir l'ensemble de données ;
envoyer audit au moins un dispositif de communication sans fil voisin une demande (52) d'aide à la réception de l'ensemble de données ;
recevoir une réponse dudit au moins un dispositif de communication sans fil voisin qui accepte la demande;
envoyer des données de qualité de la liaison sur la première interface de réseau sans fil (28), qui envisagent le nombre de dispositifs voisins qui contribuent à la réception de l'ensemble de données et qui indiquent une meilleure qualité de la liaison que celle qui existe sur cette première interface de réseau sans fil (28) ;
recevoir (54) des données appartenant à l'ensemble de données via la première interface de réseau sans fil (28) ;
déterminer (58) si la totalité de l'ensemble de données a été correctement reçue ;
ne demander que des données qui n'ont pas été correctement reçues sur la première interface sans fil (28) auprès dudit au moins dispositif de communication sans fil voisin ;
recevoir (54) les données demandées qui n'ont pas été correctement reçues via la première interface de réseau sans fil (28), en provenance dudit au moins un dispositif de communication sans fil voisin (22 ; 12), via l'interface de dispositif voisin (32), ledit dispositif de communication sans fil voisin (22 ; 12) ayant à son tour reçu ledit ensemble de données via une seconde interface de réseau sans fil (42) associée audit réseau étendu sans fil (CN, AN) ; et
combiner (62) les données de l'ensemble de données reçues via la première interface de réseau sans fil (28) avec les données de l'ensemble de données reçues du dispositif de communication sans fil voisin (22 ; 12) afin d'obtenir l'ensemble de données complet et de corriger les éventuelles parties défectueuses de l'ensemble de données que ledit au moins un dispositif de communication sans fil voisin (22 ; 12) a lui-même reçues.

2. Dispositif de communication sans fil (20 ; 10), comprenant :
une première interface de réseau sans fil (28) associée à un réseau étendu sans fil (CN, AN) ;
une interface de dispositif voisin (32) utilisant la technologie infrarouge ou Bluetooth pour l'interfaçage avec des dispositifs de communication sans fil voisins (22 ; 12) ;
une unité de communication par réseau (30) destinée à communiquer sur la première interface de réseau sans fil (28) ;
une unité de communication proche (34) destinée à communiquer avec des dispositifs de communication sans fil voisins (22 ; 12) via la première interface de dispositif voisin (32) ; et
une unité de commande (36), configurée pour :
détecter, à l'aide d'une interface de dispositif voisin (32) utilisant la technologie infrarouge ou Bluetooth, s'il existe au moins un dispositif de communication sans fil voisin qui est proche ;
permettre à l'utilisateur de sélectionner ledit au moins un dispositif de communication sans fil voisin pour contribuer à recevoir l'ensemble de données ;
envoyer audit au moins un dispositif de communication sans fil voisin une demande d'aide à la réception de l'ensemble de données ;
recevoir une réponse dudit au moins un dispositif de communication sans fil voisin qui accepte la demande ;
envoyer des données de qualité de la liaison sur la première interface de réseau sans fil (28), qui envisagent le nombre de dispositifs voisins qui contribuent à la réception de l'ensemble de données et qui indiquent une meilleure qualité de la liaison que celle qui existe sur cette première interface de réseau sans fil (28) ;
recevoir des données appartenant à l'ensemble de données via la première interface de réseau sans fil (28) ;
déterminer si la totalité de l'ensemble de données a été correctement reçue ;
ne demander que des données qui n'ont pas été correctement reçues auprès dudit au moins dispositif de communication sans fil voisin ;
recevoir les données demandées en provenance dudit au moins un dispositif de communication sans fil voisin (22 ; 12), via l'interface de dispositif voisin (32), ledit dispositif de communication sans fil voisin (22 ; 12) ayant à son tour reçu ledit ensemble de données via une seconde interface de réseau sans fil (42) associée audit réseau étendu sans fil (CN, AN) ; et
combiner (62) les données de l'ensemble de données reçues via la première interface de réseau sans fil (28) avec les données de l'ensemble de données reçues du dispositif de communication sans fil voisin (22 ; 12) afin d'obtenir l'ensemble de données complet et de corriger les éventuelles parties défectueuses de l'ensemble de données que ledit au moins un dispositif de communication sans fil voisin (22 ; 12) a lui-même reçues.

3. Dispositif de communication sans fil (20 ; 10) selon la revendication 2, dans lequel l'unité de commande (36) est en outre configurée pour envoyer des données de validation de la réception au second dispositif de communication sans fil voisin (22 ; 12).

4. Dispositif de communication sans fil (20 ; 10) selon la revendication 2, dans lequel des données de l'ensemble de données reçues sur la première interface de réseau sans fil (28) sont reçues avec une qualité qui correspond à la qualité de liaison indiquée.

5. Dispositif de communication sans fil (20) selon l'une quelconque des revendications 2 à 4, dans lequel le dispositif est un dispositif de communication portatif ou une station de base d'un réseau sans fil.

6. Procédé destiné à un dispositif de communication sans fil (22 ; 12), pour aider un dispositif de communication sans fil voisin (20 ; 10) qui reçoit un ensemble de données via une première interface de réseau sans fil (28) du dispositif voisin (20 ; 10) qui est associée à un réseau étendu sans fil (CN, AN), comprenant les étapes consistant à :
recevoir (66) une demande d'aide à la réception de l'ensemble de données, provenant du dispositif de communication sans fil voisin (20 ; 10) ;
déterminer d'accepter ou non la demande ;
en cas d'acceptation, envoyer au dispositif de communication sans fil voisin (20 ; 10) une réponse acceptant d'aider à la réception ;
recevoir (68) des données de l'ensemble de données, sur une seconde interface de réseau sans fil (42) associée audit réseau étendu sans fil (CN, AN) ; et
envoyer (70) les données demandées appartenant à l'ensemble de données et reçues sur la seconde interface de réseau sans fil (42), via l'interface de dispositif voisin (46) utilisant une technologie infrarouge ou Bluetooth, afin de permettre au dispositif de communication sans fil voisin (20 ; 10) de combiner des données de l'ensemble de données qu'il a reçues via la première interface de réseau sans fil (28) avec des données de l'ensemble de données fournies par le dispositif de communication sans fil (22 ; 12) afin d'obtenir l'ensemble de données complet et de corriger les éventuelles parties défectueuses de l'ensemble de données que le dispositif de communication sans fil (22 ; 12) a lui-même reçues.

7. Dispositif de communication sans (22; 12) destiné à aider un dispositif de communcation sans fil voisin (20; 10) qui reçoit un ensemble de données via une première interface de réseau sans fil (28) du dispositif voisin (20; 10) qui est associée à un réseau étendu sans fil (CN, AN) comprenant:
une seconde interface de réseau sans fil (42) associée audit réseau étendu sans fil (AN, CN);
une interface de dispsitif voisin (46) utilisant la technologie infrarouge ou Bluetooth pour s'interfacer avec des dispositifs de communication sans fil voisins (20; 10);
une unité de communication en réseau (44) destinée à communiquer sur la seconde interface de réseau sans fil (42);
une unité de communication voisine (48) destinée à communiquer avec des dispositifs de communication sans fil voisins (20; 10) via l'interface de dispositif voisin ; et
une unité de commande (50), configurée pour
recevoir une demande d'aide à la réception de l'ensemble de données, provenant du dispositif de communication sans fil voisin (20; 10);
déterminer d'accepter ou non la demande;
en cas d'acceptation, envoyer au dispositif de communication sans fil voisin (20; 10) une réponse acceptant d'aider à la réception;
recevoir des données de l'ensemble de données, sur une seconde interface de réseau sans fil (42) associée audit réseau étendu dans fil (CN, AN) et recevoir une demande uniquement pour des données qui n'ont pas été correctement reçues sur le dispositif de communication sans fil voisin (20; 10) via l'interface de dispositif voisin (46);
envoyer les données demandées via l'interface de dispositif voisin (46), afin de permettre au dispositif de communication sans fil voisin (20; 10) de combiner des données de l'ensemble de données qu'il a lui-même reçues via la première interface de réseau sans fil (28) avec des données de l'ensemble de données fournies par le dispositif de communication sans fil (22, 12) afin d'obtenir l'ensemble de données complet et de corriger les éventuelles parties défectueuses de l'ensemble de données que le dispositif de communication sans fil (22, 12) a lui-même reçues.

8. Dispositif de communication sans fil (22 ; 12) selon la revendication 7, dans lequel l'unité de commande (50) est en outre configurée pour recevoir des données de validation de la réception en provenance du dispositif de communication sans fil voisin (20 ; 10) et commander à l'unité de communication sur réseau (44) d'utiliser ces données de validation de la réception pour recevoir les données de l'ensemble de données via la seconde interface de réseau sans fil (42).

9. Dispositif de communication sans fil (22) selon l'une quelconque des revendication 7 et 8, dans lequel celui-ci est un dispositif de communication sans fil ou une station de base.
